# EUROPÄISCHE PATENTSCHRIFT

(11) **EP 3 380 805 B1**
(45) Veröffentlichungstag und Bekanntmachung des Hinweises auf die Patenterteilung: **30.10.2019**
(21) Anmeldenummer: 16798742.9
(22) Anmeldetag: 22.11.2016
(51) Int. Cl.: G01B 5/00, G01B 7/00

(54) **MESSANORDNUNG MIT EINEM TAKTILEN MESSTASTER UND EINEM KLEMMHALTER**
MEASURING ASSEMBLY WITH A TACTILE MEASURING PROBE AND A CLAMPING HOLDER
ENSEMBLE DE MESURE COMPRENANT UN PALPEUR DE MESURE TACTILE ET UN COLLIER DE FIXATION

(30) Priorität: 25.11.2015 DE 102015223334
(43) Veröffentlichungstag der Anmeldung: 03.10.2018
(73) Patentinhaber: ZF Friedrichshafen AG, 88046 Friedrichshafen (DE)
(72) Erfinder: KRAMER, Edgar, 88069 Tettnang (DE); RAISER, Christian, 88069 Tettnang (DE); TUZA, Stefan, 84337 Schönau (DE)
(86) Internationale Anmeldenummer: PCT/EP2016/078378
(87) Internationale Veröffentlichungsnummer: WO 2017/089326

(56) Entgegenhaltungen:
- DE-A1-102007 043 293
- DE-U- 1 735 678
- US-A- 3 106 023

## Beschreibung

Die Erfindung betrifft eine Messanordnung mit einem stabförmigen, taktilen Messtaster und einem Halter zur Befestigung dieses Messtasters.

Bei dem taktilen Messtaster handelt es sich insbesondere um einen Längenmesstaster, der einen mittels Feinmechanik in einem Rohr oder Röhrchen geführten Tastkopf (bspw. ein gehärteter Stahlkugelkopf) aufweist. Die Tastkopfposition kann analog, bspw. induktiv, oder auch digital, bspw. inkrementell, erfasst werden. Solche Messtaster sind in verschiedensten Ausführungen als Zukaufteile erhältlich und werden für unterschiedlichste Messanwendungen verwendet, insbesondere auch im Werkzeug-, Maschinen- und Prüfanlagenbau.

Die DE 201 20 162 U1 beschreibt einen Halter für einen solchen Messtaster und zeigt auch eine mit diesem Halter gebildete Messanordnung.

Weiterhin offenbart US 3 106 023 A eine Messanordnung mit einem stabförmigen, taktilen Messtaster und einem gabelartig ausgebildeten Klemmhalter zur Befestigung des Messtasters in einer kreisförmigen Bohrung. Am äußeren Ende der Bohrung befindet sich ein Spalt, der zur Befestigung des Messtasters mit einer Spannschraube verkleinert werden kann.

Der Erfindung liegt die Aufgabe zugrunde, eine weitere Messanordnung eingangs genannter Art anzugeben, die wenigstens einen mit dem Stand der Technik einhergehenden Nachteil nicht oder zumindest nur in einem verminderten Umfang aufweist.

Diese Aufgabe wird gelöst durch eine erfindungsgemäße Messanordnung mit den Merkmalen des Patentanspruchs 1. Weiterbildungen und Ausgestaltungen der Erfindung ergeben sich analog für beide Erfindungsgegenstände aus den abhängigen Patentansprüchen, der nachfolgenden Beschreibung und den Figuren.

Bei der erfindungsgemäßen Messanordnung ist der Halter als Klemmhalter ausgebildet, der einen den Messtaster umgreifenden Haltring und zwei an einer Ringöffnung des Halterings nach außen weisende Schenkel aufweist, wobei diese Schenkel durch einen Spalt beabstandet und mithilfe einer Spannschraube gegeneinander verspannbar sind und wobei im Spalt wenigstens ein elastisches Element angeordnet ist, welches ein Überspannen (durch die Spannschraube) verhindert.

Beim Verspannen der Schenkel des Klemmhalters wird auf den Messtaster bzw. auf den Schaft des Messtasters eine fixierende Klemmkraft ausgeübt. Wird die Spannkraft und die daraus resultierende Klemmkraft zu hoch, kommt es zu einer Deformation des im Haltring aufgenommenen Messtasters, wodurch die empfindliche Innenführung des Tastkopfs in Mitleidenschaft gezogen wird, so dass der Messtaster falsche Messergebnisse liefert (die im normalen Messbetrieb nicht ohne Weiteres festzustellen sind) oder sogar dauerhaft beschädigt ist. Ferner kann es auch zu einer bleibenden Deformation des Klemmhalters, insbesondere dessen Halterings, kommen, so dass nicht nur der Messtaster, sondern auch der Klemmhalter selbst ausgetauscht werden muss.

Um dies zu verhindern, sieht die Erfindung vor, dass im Spalt zwischen den Schenkeln des Klemmhalters wenigstens ein elastisches Element angeordnet ist, welches beim Verspannen komprimiert wird und dadurch im Spalt eine Gegenkraft aufbaut, die sicherstellt, das sowohl der Klemmhalter als auch der Messtaster nicht deformiert bzw. beschädigt werden. Da das elastische Element beim Verspannen verformt wird, kann ferner anhand dessen Verformungszustands visuell erkannt werden, wann eine ausreichende Klemmkraft erreicht ist.

Das elastische Element ist bevorzugt aus einem Material mit elastischen Eigenschaften gebildet, bspw. aus Gummi, Silikon oder elastischem Kunststoff, wie bspw. einem thermoplastischen Elastomer (z. B. Polyethylen) oder einem synthetischen Kautschuk (z. B. Nitrilkautschuk oder EPDM). Das Material sollte eine Härte im Bereich von 30 bis 80 Shore aufweisen.

Beim Anziehen der Spannschraube werden die Schenkel des Klemmhalters verspannt und im Halte- bzw. Spannring wird eine resultierende, direkt oder indirekt auf den Messtaster wirkende umfängliche Klemm- bzw. Spannkraft erzeugt. Aufgrund von Fertigungstoleranzen des Messtasters und/oder des Klemmhalters sowie gegebenenfalls auch aufgrund unvorhersehbarer Einflüsse bei Verwendung einer Klemmhülse (siehe unten) ist die Vorgabe von Anzugsmomenten meist nicht zufriedenstellend. Das erfindungsgemäß vorgesehene elastische Element im Spalt zwischen den Schenkeln des Klemmhalters verhindert auch ohne Vorgabe eines Anzugmoments das übermäßige Anziehen der Spannschraube und eine Verformung oder Beschädigung des Messtasters.

Bevorzugt ist vorgesehen, dass der Messtaster indirekt bzw. mittelbar im Klemmhalter bzw. dessen Haltering angeordnet ist, derart, dass sich radial zwischen dem Haltering und dem Messtaster eine Klemmhülse befindet. Die insbesondere aus Metall oder Kunststoff gebildete Klemmhülse kann wenigstens einen axial verlaufenden Schlitz aufweisen, wodurch die vom Klemmhalter erzeugte Klemmkraft auf den Messtaster übertragen wird. Bevorzugt ist vorgesehen, dass diese Klemmhülse zumindest in einer axialen Richtung aus dem Haltering des Klemmhalters herausragt und das hierüber die positionsgenaue Befestigung des Klemmhalters erfolgen kann. Ebenso kann auch der Klemmhalter selbst mit einem Befestigungsabschnitt oder dergleichen ausgebildet sein.

Durch das Einbringen des elastischen Elements in den Spalt des Klemmhalters ist gewährleistet, dass trotz großem Anziehmoment der Klemmweg eingeschränkt wird. Das elastische Material bzw. die elastische Masse des elastischen Elements baut quasi im Spalt zwischen den Schenkeln einen Gegendruck auf, der beim Anziehen der Spannschraube eine Gegenkraft bzw. ein Gegenmoment bewirkt und somit übermäßige Kraft im Formschluss des Klemmhalters zum Messtaster verhindert. Aufgrund dieses Gegenmomentes ist es nicht mehr möglich den Klemmhalter zu stark anzuziehen. Dies verhindert wiederum eine zu starke Deformation des Klemmhalters und des Messtasters.

Der Klemmhalter kann einstückig aus Metall gebildet sein. Bevorzugt handelt es sich um ein mechanisch bzw. spanend bearbeitetes Stahlteil (Fräs- und/oder Drehteil).

Das elastische Element kann formlos ausgebildet sein. Bei dem elastischen Element kann es sich bspw. um ein formloses elastisches Material (siehe oben) handeln, dass in den Spalt zwischen den Schenkeln des Klemmhalters eingebracht ist. Das elastische Element kann aber auch die Form eines Ringes, bspw. eines O-Ringes, oder einer Platte (bzw. eines Plättchens) aufweisen, der bzw. die im Spalt angeordnet ist. Bevorzugt wird der Ring so angeordnet, dass dieser von der Spannschraube durchragt wird. Auch die Platte kann optional mit einer Bohrung bzw. Lochung ausgebildet sein, die von der Spannschraube durchragt wird.

Gemäß der vorausgehenden Erläuterungen weist der Klemmhalter der erfindungsgemäßen Messanordnung einen Haltring zur Aufnahme des Messtasters und zwei an einer Ringöffnung nach außen weisende Schenkel auf, wobei die Schenkel durch einen Spalt beabstandet und mithilfe einer Spannschraube gegeneinander verspannbar sind und wobei im Spalt wenigstens ein elastisches Element angeordnet ist, welches ein Überspannen des Klemmhalters durch die Spanneinrichtung verhindert.

Das elastische Element kann in den Spalt eingeklemmt und/oder eingeklebt sein. Alternativ oder ergänzend hierzu kann vorgesehen sein, dass es sich bei dem elastischen Element, wie bereits vorausgehend dargelegt, um einen Ring oder eine gelochte Platte handelt, der bzw. die von einer durchragenden Spannschraube festgehalten wird. Der Ring oder die Platte kann optional auch zweiteilig ausgebildet und um die Spannschraube herumgelegt sein.

Im ungespannten Zustand kann der Spalt zwischen den Schenkeln des Klemmhalters ein Spaltmaß von 1,0 mm bis 2,5 mm und insbesondere von ca. 1,5 mm bis ca. 2,0 mm aufweisen. Das im Spalt angeordnete elastische Element fungiert auch als Distanzelement, welches beim Verspannen bzw. beim Anziehen der Spannschraube das Zusammendrücken der Schenkel auf Nullmaß (Nullspalt) verhindert.

Das elastische Element ist auf das Spaltmaß zwischen den Schenkeln abgestimmt. Im ungespannten Zustand weist das elastische Element bevorzugt eine Dicke auf, die wenigstens dem Spaltmaß entspricht.

Der Klemmhalter als solches ist nicht nur zur Befestigung eines taktilen Messtasters geeignet, sondern kann auch für andere Zwecke verwendet werden, bspw. zur Befestigung einer Messuhr oder dergleichen.

Mit der Erfindung werden Kosten, Montage- und Wartungsaufwände reduziert. Ein weiterer Vorteil ist darin zu sehen, dass der Klemmhalter kleinbauend ist und damit auch bei beengten Platzverhältnissen eingesetzt werden kann. Dies ist keine abschließende Aufzählung von Vorteilen, die mit der Erfindung einhergehen.

Die Erfindung wird nachfolgend beispielhaft und in nicht einschränkender Weise mit Bezug auf die Figuren näher erläutert.
Fig. 1 zeigt eine erfindungsgemäße Messanordnung in einer Seitenansicht.
Fig. 2 zeigt einen zur Messanordnung der Fig. 1 gehörenden Klemmhalter in einer axialen Draufsicht von links.
Fig. 3 zeigt in einer perspektivischen Darstellung den Klemmhalter aus Fig. 2 mit elastischem Element.

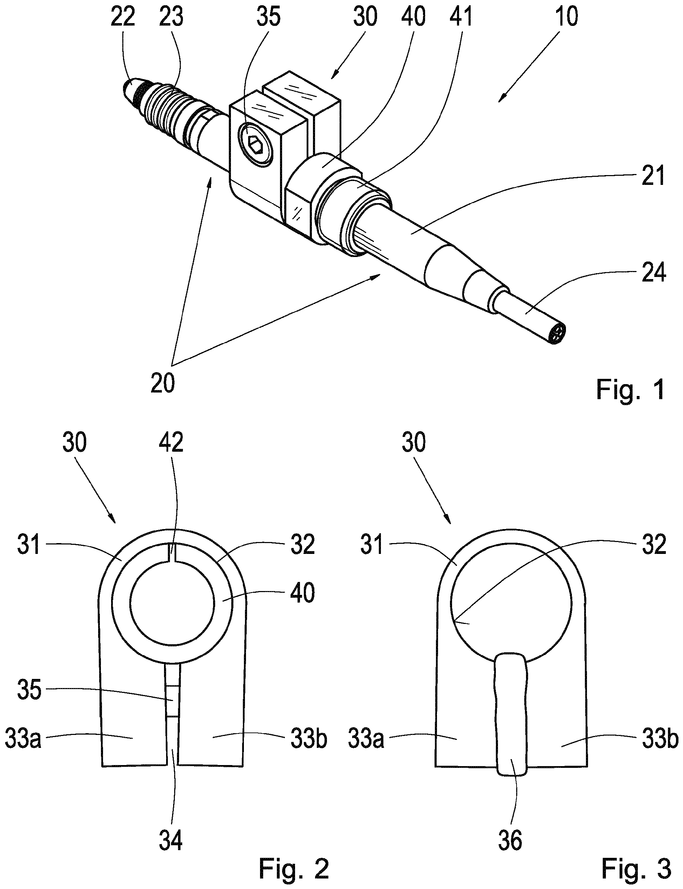

Zu der in Fig. 1 gezeigten Messanordnung 10 gehört ein konventioneller stabförmiger Messtaster 20 mit einem hohlzylindrischen Schaft 21 und einem Kugeltastkopf 22, der mittels Feinmechanik im Inneren des Schafts 21 gelagert und geführt ist. Mit dem Bezugszeichen 23 ist eine Faltenbalgdichtung bezeichnet und mit Bezugszeichen 24 ist ein Kabelstecker bezeichnet. Zur Messanordnung 10 gehört ferner ein den Schaft 21 des Messtasters 20 umgreifender Klemmhalter 30 und eine zwischen dem Klemmhalter 30 und dem Messtaster 20 eingeklemmte Klemmhülse 40, die in axialer Richtung zum Tastkopf 22 übersteht und mit einem Gewinde 41 zur Befestigung der Messanordnung 10 in einer Bohrung ausgebildet ist.

Fig. 2 zeigt den Klemmhalter 30 ohne Messtaster 20. Der Klemmhalter 30 ist einstückig ausgebildet, kann aber prinzipiell auch mehrstückig ausgebildet sein. Der Klemmhalter 30 ist rohrschellenartig gestaltet und weist einen Halte- bzw. Spannring 31 auf, der einen zylindrischen Aufnahmebereich bzw. eine Aufnahmebohrung 32 umschließt. Der Durchmesser der Aufnahmebohrung 32 beträgt bspw. 6 bis 10 mm und insbesondere ca. 8 mm. In Umfangsrichtung weist der Haltering 31 eine Ringöffnung auf, an der symmetrisch zwei radial nach außen gerichtete Schenkel (Spannschenkel) bzw. Arme (Spannarme) 33a/33b ausgebildet sind, die durch einen Spalt bzw. Klemmspalt 34 zueinander beabstandet sind.

Die beiden Schenkel 33a/33b sind durch eine Spannschraube 35 verbunden. Beim Anziehen der Spannschraube 35 werden die Schenkel 33a/33b unter Verringerung des Spalts 34 gegeneinander verspannt, wobei auf die in der Aufnahmebohrung 32 aufgenommene Klemmhülse 40 eine Klemmkraft ausgeübt wird, die diese auf den Schaft 21 des Messtasters 20 überträgt, wodurch eine Fixierung herbeigeführt wird. Das Bezugszeichen 42 bezeichnet einen axial verlaufenden, nicht-durchgängigen Schlitz in der Klemmhülse 40.

Um beim Verspannen des Klemmhalters 30 durch Anziehen der Spannschraube 35 ein Überspannen zu verhindern, befindet sich erfindungsgemäß ein elastisches Element 36 im Spalt 34 zwischen den Schenkel 33a/33b, wie in Fig. 3 gezeigt. (Fig. 3 zeigt nur den Klemmhalter 30 ohne Klemmhülse 40). Bei dem elastischen Element 36 handelt es sich um eine aus synthetischem Kautschuk oder dergleichen gebildete Platte mit einer Bohrung, die von der Spannschraube 35 durchragt wird. Bei dem in Fig. 3 gezeigten Ausführungsbeispiel ist der gesamte Spalt 34 zwischen den Schenkeln 33a/33b vom elastischen Element 36 ausgefüllt.

Beim Anziehen der Spannschraube 35 verhindert das elastische Element 36, dass der Klemmhalter 30 zu stark angezogen werden kann, so dass der Messtaster 20 unbeeinträchtigt bleibt. Zusätzlich wird dem ausführenden Montagehandwerker durch das Herausquellen des elastischen Materials aus dem Spalt 34 (wie in Fig. 3 dargestellt) visuell der Spannungszustand angezeigt, sodass erkennbar wird, wann der Klemmhalter 30 ausreichend angezogen ist.

### Bezugszeichen

- 10: Messanordnung
- 20: Messtaster
- 21: Schaft
- 22: Tastkopf
- 23: Faltenbalgdichtung
- 24: Kabelstecker
- 30: Klemmhalter
- 31: Haltering
- 32: Aufnahmebohrung
- 33a: Schenkel
- 33b: Schenkel
- 34: Spalt
- 35: Spannschraube
- 36: elastisches Element
- 40: Klemmhülse
- 41: Gewinde
- 42: Schlitz

## Patentansprüche

1. Messanordnung (10) mit einem stabförmigen, taktilen Messtaster (20) und einem Halter (30) zur Befestigung des Messtasters (20), wobei der Halter (30) als Klemmhalter ausgebildet ist, **dadurch gekennzeichnet, dass** der Klemmhalter (30) einen den Messtaster (20) umgreifenden Haltring (31) und zwei an einer Ringöffnung nach außen weisende Schenkel (33a, 33b) aufweist, wobei die Schenkel (33a, 33b) durch einen Spalt (34) beabstandet und mithilfe einer die Schenkel (33a, 33b) verbindenden Spannschraube (35) der Messanordnung (10) gegeneinander verspannbar sind und wobei im Spalt (34) wenigstens ein elastisches Element (36) angeordnet ist, welches ein Überspannen verhindert, indem dieses beim Verspannen komprimiert wird und dadurch im Spalt (34) eine Gegenkraft aufbaut, die sicherstellt, das sowohl der Klemmhalter (30) als auch der Messtaster (20) nicht deformiert werden.

2. Messanordnung (10) nach Anspruch 1, **dadurch gekennzeichnet, dass** das elastische Element (36) aus Gummi, Silikon oder elastischem Kunststoff gebildet ist.

3. Messanordnung (10) nach einem der vorausgehenden Ansprüche, **dadurch gekennzeichnet, dass** zwischen dem Haltering (31) des Klemmhalters (30) und dem Messtaster (20) eine Klemmhülse (40) angeordnet ist.

4. Messanordnung (10) nach einem der vorausgehenden Ansprüche, **dadurch gekennzeichnet, dass** der Klemmhalter (30) einstückig aus Metall gebildet ist.

5. Messanordnung (10) nach einem der vorausgehenden Ansprüche, **dadurch gekennzeichnet, dass** das elastische Element (36) formlos ausgebildet ist oder die Form eines Ringes oder einer rechteckigen Platte aufweist.

6. Messanordnung (10) nach einem der vorausgehenden Ansprüche, **dadurch gekennzeichnet, dass** das elastische Element (36) in den Spalt (34) eingeklebt ist.

7. Messanordnung (10) nach einem der vorausgehenden Ansprüche, **dadurch gekennzeichnet, dass** der Spalt (34) zwischen den Schenkeln (33a, 33b) ein Spaltmaß von 1,0 mm bis 2,5 mm aufweist.

## Claims

1. Measuring arrangement (10) having a rod-shaped, tactile measuring sensor (20) and a holder (30) for fastening the measuring sensor (20), the holder (30) being configured as a clamping holder, **characterized in that** the clamping holder (30) has a holding ring (31) which engages around the measuring sensor (20), and two limbs (33a, 33b) which point to the outside at a ring opening, the limbs (33a, 33b) being spaced apart by way of a gap (34), and it being possible for the said limbs (33a, 33b) to be braced against one another with the aid of a clamping screw (35) of the measuring arrangement (10), which clamping screw (35) connects the limbs (33a, 33b), and at least one elastic element (36) being arranged in the gap (34), which elastic element (36) prevents excessive clamping by being compressed during bracing and, as a result, a counterforce building up in the gap (34), which counterforce ensures that both the clamping holder (30) and the measuring sensor (20) are not deformed.

2. Measuring arrangement (10) according to Claim 1, **characterized in that** the elastic element (36) is formed from rubber, silicone or elastic plastic.

3. Measuring arrangement (10) according to either of the preceding claims, **characterized in that** a clamping sleeve (40) is arranged between the holding ring (31) of the clamping holder (30) and the measuring sensor (20).

4. Measuring arrangement (10) according to one of the preceding claims, **characterized in that** the clamping holder (30) is formed in one piece from metal.

5. Measuring arrangement (10) according to one of the preceding claims, **characterized in that** the elastic element (36) is of amorphous configuration or has the shape of a ring or a rectangular plate.

6. Measuring arrangement (10) according to one of the preceding claims, **characterized in that** the elastic element (36) is adhesively bonded into the gap (34).

7. Measuring arrangement (10) according to one of the preceding claims, **characterized in that** the gap (34) between the limbs (33a, 33b) has a gap size of from 1.0 mm to 2.5 mm.

## Revendications

1. Arrangement de mesure (10) comprenant un palpeur de mesure (20) tactile en forme de tige et un élément de maintien (30) destiné à la fixation du palpeur de mesure (20), l'élément de maintien (30) étant réalisé sous la forme d'un élément de maintien à serrage, **caractérisé en ce que** l'élément de maintien à serrage (30) possède une bague de maintien (31) qui enveloppe le palpeur de mesure (20) et deux branches (33a, 33b) orientées vers l'extérieur au niveau d'une ouverture de bague, les branches (33a, 33b) étant espacées par un interstice (34) et pouvant être serrées l'une contre l'autre à l'aide d'une vis de serrage (35) de l'arrangement de mesure (10) qui relie les branches (33a, 33b) et au moins un élément élastique (36) étant disposé dans l'interstice (34), lequel empêche un serrage excessif en étant comprimé lors du serrage et développant ainsi une force contraire dans l'interstice (34), laquelle garantit que ni l'élément de maintien à serrage (30), ni le palpeur de mesure (20) ne seront déformés.

2. Arrangement de mesure (10) selon la revendication 1, **caractérisé en ce que** l'élément élastique (36) est constitué de caoutchouc, de silicone ou d'une matière plastique élastique.

3. Arrangement de mesure (10) selon l'une des revendications précédentes, **caractérisé en ce qu'**une douille de serrage (40) est disposée entre la bague de maintien (31) de l'élément de maintien à serrage (30) et le palpeur de mesure (20).

4. Arrangement de mesure (10) selon l'une des revendications précédentes, **caractérisé en ce que** l'élément de maintien à serrage (30) est formé d'un seul tenant en métal.

5. Arrangement de mesure (10) selon l'une des revendications précédentes, **caractérisé en ce que** l'élément élastique (36) est réalisé non façonné ou alors possède la forme d'une bague ou d'une plaque rectangulaire.

6. Arrangement de mesure (10) selon l'une des revendications précédentes, **caractérisé en ce que** l'élément élastique (36) est collé dans l'interstice (34).

7. Arrangement de mesure (10) selon l'une des revendications précédentes, **caractérisé en ce que** l'interstice (34) entre les branches (33a, 33b) possède une cote d'interstice de 1,0 mm à 2,5 mm.
